# FASCICULE DE BREVET EUROPEEN

(11) **EP 0 624 308 B1**
(45) Date de publication et mention de la délivrance du brevet: **05.02.1997**
(21) Numéro de dépôt: 94401071.9
(22) Date de dépôt: 11.05.1994
(51) Int. Cl.: A01C 11/02, A01G 9/10

(54) **Système de positionnement et de guidage d'un porte-plateau sur une machine de repiquage**
Führung- und Einstellvorrichtung für eine Setzlingschale auf einem Pflanzgerät
Guiding and positioning system for a seedling tray on a soil plug planter

(30) Priorité: 14.05.1993 FR 9306007
(43) Date de publication de la demande: 17.11.1994
(73) Titulaire: CONSTRUCTIONS METALLIQUES FLORENTAISES S.A., F-44370 Varades (FR)
(72) Inventeur: Cadot, Albert, F-44370 Varades (FR)
(74) Mandataire: Phélip, Bruno

(56) Documents cités:
- EP-A- 0 023 702
- FR-A- 2 658 980

## Description

La présente invention concerne un perfectionnement aux machines de plantation de plants cultivés sous forme de mottes dans des plateaux alvéolés. Elle concerne plus particulièrement un système de positionnement et de guidage pour un porte-plateau sur lequel est fixé au moins un plateau alvéolé, qui contient les mottes de plants cultivés.

Il existe plusieurs sortes de machines qui permettent de prélever les plants cultivés dans des plateaux, pour les placer ensuite directement en terre ou dans des pots.

On trouve des machines de ce type décrites par exemple dans les documents FR-A-2 432 265, EP-A-23702 et FR-A-2 658 980.

On remarque, dans ces documents, la présence d'un porte-plateau c'est-à-dire d'un cadre sur lequel est fixé le plateau alvéolé. Ce cadre est adapté pour recevoir le cas échéant différents types de plateaux. En effet, il existe une grande variété de formes et de dimensions de plateaux alvéolés. Selon les fabricants, ces plateaux comportent des nombres de lignes, de colonnes différents.

Les porte-plateaux sont aménagés pour pouvoir tenir compte de ces variations et permettre une éjection des mottes une par une ou par groupe, généralement au niveau d'une même ligne ou rangée.

Dans les documents précités, le porte-plateau est guidé verticalement sur un chariot mobile horizontalement. Le déplacement vertical du porte-plateau s'effectue automatiquement par simple gravité pour vider ligne par ligne, toutes les alvéoles du plateau.

Le chariot est lui-même guidé horizontalement par rapport à un bâti fixe, et il se déplace pas à pas, d'une distance qui correspond au moins à l'intervalle entre deux colonnes du plateau de façon à vider la ou les alvéoles d'une même ligne.

Le déplacement horizontal du chariot s'effectue par des moyens appropriés qui tiennent compte de l'intervalle entre deux colonnes.

On trouve encore, sur ces machines, solidaires du bâti, des moyens d'éjection des mottes, en forme de poussoirs, ainsi que des moyens de prise en charge de ces mottes et de repiquage.

Selon l'invention, ce système de positionnement et de guidage est constitué d'une part, d'un porte-plateau en forme de plaque munie de passages pour les moyens d'éjection et de rainures horizontales correspondant aux lignes d'alvéoles, lesquelles rainures sont reliées entre elles pour former un chemin continu entre les extrémités inférieure et supérieure de la plaque et, d'autre part, d'une butée, solidaire du bâti, coopérant avec ledit chemin pour guider le porte-plateau.

Selon une disposition préférentielle de l'invention, la butée est constituée d'un galet centré sur un axe perpendiculaire au plateau et dont le diamètre est sensiblement inférieur à la largeur de la rainure.

Selon une autre disposition de l'invention, le galet est creux axialement et sert de guide à un poussoir d'éjection des mottes, axé sur ledit galet.

Toujours selon l'invention, le chemin formé par les rainures est de préférence arrondi aux extrémités de ces dernières pour provoquer un mouvement transversal du chariot et de ce fait éviter une chute brutale du porte-plateau d'une ligne à l'autre, en ralentissant ou freinant le mouvement.

Selon une autre disposition préférentielle de l'invention, la plaque constituant le porte-plateau est réalisée en matériau du genre aluminium et elle comporte des rainures latérales verticales pour permettre son guidage par rapport au chariot support.

Mais l'invention sera encore détaillée à l'aide de la description suivante et des dessins annexés donnés à titre indicatif et dans lesquels :
- la figure 1 illustre de façon schématique, les éléments essentiels du système de positionnement et de guidage d'une machine à repiquer selon l'invention ;
- la figure 2 illustre, toujours de façon schématique, une élévation en coupe, du système de positionnement et de guidage d'un porte-plateau.

Le plateau alvéolé 1 est fixé sur un porte-plateau 2. Ce porte-plateau 2 est guidé verticalement sur un chariot 3 qui est lui-même guidé en translation, horizontalement, sur le bâti 4 de la machine de repiquage.

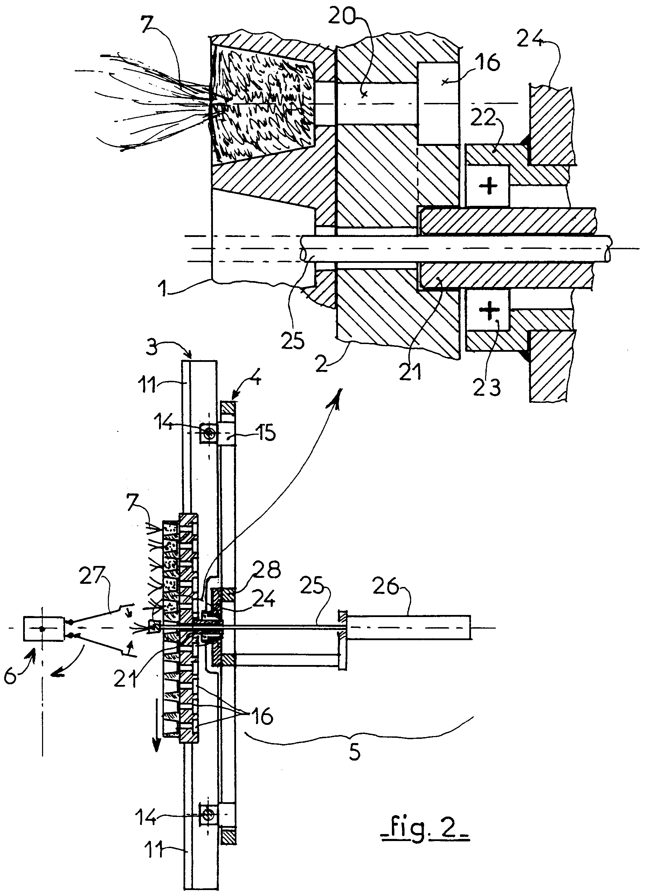

On remarque, figure 2, des moyens 5 qui permettent de sortir les plants du plateau 1 et des moyens 6 qui prennent en charge ces plants pour les repiquer.

Le plateau 1 comporte une multitude de plants 7 disposés selon des lignes 8 et des colonnes 9. Ces plants 7 sont disposés dans des alvéoles ouvertes sur le fond du plateau.

Ce plateau 1 est fixé sur le porte-plateau 2 par tout moyen approprié. Compte-tenu de la grande variété de plateaux, à chaque type de plateau 1 correspond un porte-plateaux 2.

Le porte-plateau 2 se présente sous la forme d'une plaque rectangulaire munie, latéralement, de rainures 10 qui coopèrent avec des guides verticaux 11 aménagés sur le chariot 3.

Le porte-plateau 2 peut ainsi coulisser verticalement, guidé par le chariot 3. Le mouvement du porte-plateau 2 s'effectue par simple gravité. La hauteur du chariot 3 est telle qu'il peut accepter au moins deux porte-plateau 2 de façon à assurer une continuité d'approvisionnement.

Le chariot 3 est constitué de deux bras 12 verticaux reliés entre eux par des traverses horizontales 13. Ces bras verticaux 12 portent les guides 11. Les traverses 13 se trouvent décalées en arrière des guides 11 pour permettre le passage du porte-plateau 2 et assurent le guidage du chariot sur des rails horizontaux 14 ; ces rails 14 sont solidaires du bâti 4 au moyen de pattes de déport 15.

Le mouvement horizontal du chariot 3 s'effectue sur une course qui correspond au moins à deux fois la largeur d'un porte-plateau 2, si les mottes sont retirées une par une.

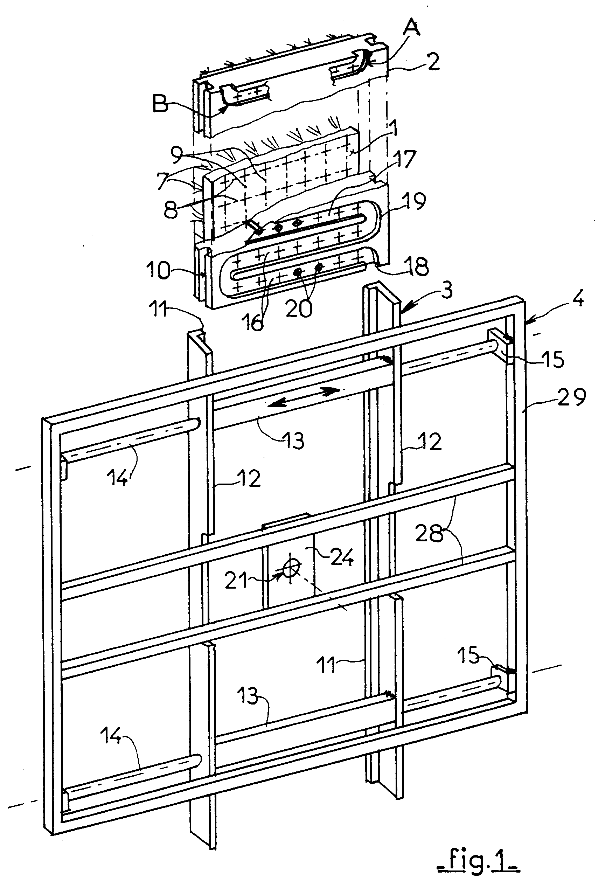

Ce porte-plateau 2 comporte, sur sa face arrière c'est-à-dire la face opposée à celle où est fixé le plateau 1, des rainures horizontales 16, parallèles les unes aux autres, et centrées sur les lignes de plants, c'est-à-dire centrées sur chaque rangée 8 d'alvéoles. Ces rainures 16 sont reliées entre elles pour former un chemin continu 17 en zig-zag entre l'extrémité inférieure du porte-plateau 2 et sa partie supérieure. On remarque, représentée figure 1, qu'il existe, selon le nombre de rainures 16, une sortie A ou B pour le chemin selon que le nombre de rainures est pair ou impair respectivement.

Le nombre de rainures 16 correspond au nombre de rangées 8 du plateau 1.

On remarque l'entrée inférieure 18 du chemin 17. Cette entrée est située sur le côté droit du porte-plateau 2, à sa partie inférieure. Cette entrée 18 a une largeur qui correspond à la largeur des rainures 16. Cette entrée 18 se situe en vis à vis de la sortie supérieure A du plateau précédent, dans l'exemple de porte-plateau représenté figure 1. Il y a ainsi une continuité du chemin 17 d'un porte-plateau à l'autre.

On remarque également l'arrondi aménagé entre deux rainures adjacentes. Cet arrondi 19 permet d'éviter une chute brutale du porte-plateau 2 lorsque l'on arrive à l'extrémité d'une rainure 16 ; il oblige le chariot 3 à effectuer un léger mouvement de va et vient, ce qui freine et ralentit la chute du porte-plateau.

On remarque encore, positionné dans les rainures 16, au centre, le passage des moyens d'éjection 5. Dans l'exemple représenté figure 1, les moyens d'éjection traversent la plaque par des orifices 20 qui se situent en face de chacune des alvéoles du plateau 1. Ainsi, sur une plaque constituant le porte-plateau 2, les rainures 16 et les orifices 20 constituent une sorte de réplique des emplacements des plants sur le plateau 1.

On remarque, figure 2, le bâti 4 sur lequel est guidé, au moyen des glissières 14, le chariot 3. Ce chariot 3 maintient, au moyen de ses guides 11, le porte-plateau 2. On remarque, sur le porte-plateau 2, un plateau 1 muni,dans sa partie supérieure, des plants 7 qui restent à éjecter.

Le porte-plateau 2 comporte sur son dos, les rainures horizontales 16 formant le chemin 17. L'immobilisation verticale du porte-plateau 2 s'effectue au moyen d'une butée 21 qui coopère avec les rainures 16.

Cette butée 21 est solidaire du bâti 4. On a représenté, dans l'encadré, le détail de cette butée 21 coopérant avec les rainures 16 du porte-plateau 2. On remarque que la butée 21 consiste en une sorte de galet guidé en rotation dans un palier 22 par l'intermédiaire d'un roulement 23, lequel palier 22 est solidaire du bâti 4 par l'intermédiaire d'une plaque 24 détaillée plus loin. Le diamètre du galet 21 est légèrement inférieur à la largeur de la rainure 16.

On remarque aussi, toujours dans l'encadré, l'extrémité du poussoir 25 en forme de tige, qui fait partie des moyens d'éjection 5 des plants. Ces moyens d'éjection 5 sont par exemple constitués d'un vérin 26 ancré sur le bâti 4.

Si le poussoir 25 est unique, il peut avantageusement être disposé au centre du galet 21, guidé par ce dernier. Le galet 21 est, dans ce cas, de forme tubulaire. On obtient ainsi une plus grande précision pour le positionnement du poussoir par rapport au porte-plateau 2.

Lorsqu'ils sont éjectés du plateau 1, par le poussoir 25, les plants sont repris par des pinces 27 qui les transfèrent directement dans un pot, non représenté, ou autre.

Le palier 22 se situe de préférence au centre du bâti 4 ; il est en fait solidaire d'une platine 24 qui est elle-même fixée, au moyen de deux traverses 28, sur les montants verticaux 29 du bâti 4.

Tel que représenté figure 1, le chemin 17 correspond au tracé nécessaire pour éjecter les plants au moyen d'un seul poussoir 25.

Dans la mesure où les plants sont éjectés par plusieurs poussoirs, le chemin 17 aura une forme sensiblement différente ; la longueur des rainures 16 sera inférieure à la longueur d'une ligne de plants ; elle correspondra à cette dernière, divisée par le nombre de poussoirs 25.

Le chemin 17 permet de caler verticalement le porte-plateau 2 dans le chariot 3, pendant que ce dernier se déplace latéralement et horizontalement. Ce déplacement latéral s'effectue par tous moyens appropriés, non représentés, qui permettent un mouvement pas à pas. Le pas en question correspond à l'intervalle entre deux colonnes du plateau 1 ou à un multiple de cet intervalle selon le nombre de poussoirs utilisés pour éjecter les mottes.

## Revendications

1. Système de positionnement et de guidage d'un porte-plateau (2) vertical sur une machine qui sert à repiquer des plants cultivés en mottes dans des alvéoles disposées en lignes et colonnes sur un plateau (1) et qui comporte : - un chariot (3) muni de moyens pour guider verticalement au moins un porte-plateau ; - un bâti (4) muni de moyens pour d'une part, guider horizontalement ledit chariot (3) et, d'autre part, déplacer pas à pas ce chariot d'une distance qui correspond au moins à l'intervalle entre deux colonnes ; - des moyens d'éjection des mottes, en forme de poussoirs ; - des moyens de prise en charge et de repiquage desdites mottes; et
un porte-plateau (2) en forme de plaque munie de passages pour lesdits moyens d'éjection, caratérisé en ce que la plaque est munie de rainures horizontales (16) correspondant aux lignes d'alvéoles, lesquelles rainures (16) sont reliées entre elles pour former un chemin (17) entre les extrémités inférieure et supérieure de ladite plaque et en ce que le système comporte une butée (21) solidaire dudit bâti (4), coopérant avec ledit chemin pour guider le porte-plateau (2).

2. Système de positionnement et de guidage d'un porte-plateau selon la revendication 1, caractérisé en ce qu'il comporte une butée (21) en forme de galet dont le diamètre correspond à la largeur de la rainure de guidage (16).

3. Système de positionnement et de guidage d'un porte-plateau selon la revendication 2, caractérisé en ce qu'il comporte un poussoir (25), axé avec le centre du galet (21).

4. Système de positionnement et de guidage d'un porte-plateau selon la revendication 1, caractérisé en ce que la portion de chemin (19) entre deux rainures consécutives (16), est arrondie pour éviter une chute brutale du porte-plateau aux extrémités desdites rainures (16).

5. Système de positionnement et de guidage d'un porte-plateau selon la revendication 1, caractérisé en ce que la plaque (2) comporte, centrés dans les rainures (16), des orifices (20) correspondant aux alvéoles du plateau (1), permettant le passage du poussoir (25).

6. Système de positionnement et de guidage d'un porte-plateau selon l'une quelconque des revendications 1 à 5, caractérisé en ce que la plaque constituant ledit porte-plateaux est réalisée dans un matériau du genre aluminium.

7. Système de positionnement et de guidage d'un porte-plateau selon l'une quelconque des revendications 1 à 6, caractérisé en ce que la plaque constituant ledit porte-plateau est munie de rainures latérales verticales (10), coopérant avec des guides (11) du chariot (3).

## Claims

1. A guiding and positioning system for a vertical seedling tray (2) on a machine used for transplanting clod-cultivated plants into cells arranged in rows and columns on a tray (1) and which contains : - a wagon (3) fitted with means for guiding vertically at least one tray-carrier; - a frame (4) fitted with means in order to, on the one hand, guide the said wagon (3) horizontally and, on the other hand, to move step by step this wagon over a distance corresponding at least to the interval between two columns; - means for ejecting the clods in the form of pushers ; - means for picking up and transplanting the said
clods and a seedling tray (2) in the form of a tray fitted with passages for the said ejection means, characterised in that the tray is fitted with horizontal grooves (16) corresponding to the lines of cells, whereby the said grooves (16) are linked to one another to form a path (17) between the lower and upper ends of the said tray and in that the system comprises a stop (21) connected rigidly to the said frame (4) working together with the said path in order to guide the seedling tray (2).

2. A positioning and guiding system for a seedling tray according to claim 1, characterised in that it contains a stop (21) in the form of a roller whose diameter corresponds to the width of the guiding groove (16).

3. A positioning and guiding system for a seedling tray according to claim 2, characterised in that it contains a pusher (25) axed with the centre of the roller (21).

4. A positioning and guiding system for a seedling tray according to claim 1, characterised in that the portion of the path (19) between two successive grooves (16) is rounded in order to prevent the seedling tray from falling suddenly at the ends of the said grooves (16).

5. A positioning and guiding system for a seedling tray according to claim 1, characterised in that the seelding tray (2) contains, centred in the grooves (16), holes corresponding to the cells in the tray (1), enabling the passage of the pusher (25).

6. A positioning and guiding system for a seedling tray according to any of the claims 1 to 5, characterised in that the plate constituting the said seedling tray is made of an aluminium-type material.

7. A positioning and guiding system for a seedling tray according to any of the claims 1 to 6, characterised in that the plate constituting the said seedling tray is fitted with vertical side grooves (10), working with guides (11) for the wagon (3).

## Patentansprüche

1. System zur Positionierung und Führung eines vertikalen Schalenträgers (2) auf einer Maschine, die zum Pikieren von Pflanzen dient, welche in Ballen in Zellen kultiviert worden sind, die in Reihen und Kolonnen auf einer Schale (1) angeordnet sind, und die umfaßt: - einen Schlitten (3), der mit Mitteln zur vertikalen Führung mindestens eines Schalenträgers versehen ist; - einen Rahmen (4), der mit Mitteln versehen ist, um einerseits den Schlitten (3) horizontal zu führen und andererseits diesen Schlitten schrittweise um eine Strecke zu verschieben, die mindestens dem Abstand zwischen zwei Kolonnen entspricht; - Mittel in Form von Drückern zum Ausstoßen der Ballen; - Mittel zur Übernahme und zum Pikieren der Ballen; und einen Schalenträger (2) in Form einer Platte, die mit Durchgängen für die Ausstoßmittel versehen ist, dadurch gekennzeichnet, daß die Platte mit horizontalen Rinnen (16) versehen ist, die den Zellenreihen entsprechen, diese Rinnen (16) untereinander verbunden sind, um eine Bahn (17) zwischen dem unteren und dem oberen Ende der Platte zu bilden, und daß das System einen Anschlag (21) aufweist, der fest mit dem Rahmen (4) verbunden ist und mit der Bahn zusammenwirkt, um den Schalenträger (2) zu führen.

2. System zur Positionierung und Führung eines Schalenträgers nach Anspruch 1, dadurch gekennzeichnet, daß es einen walzenförmigen Anschlag (21) aufweist, dessen Durchmesser der Breite der Führungsrinne (16) entspricht.

3. System zur Positionierung und Führung eines Schalenträgers nach Anspruch 2, dadurch gekennzeichnet, daß es einen Drücker (25) aufweist, der mit dem Zentrum der Walze (21) ausgerichtet ist.

4. System zur Positionierung und Führung eines Schalenträgers nach Anspruch 1, dadurch gekennzeichnet, daß der Teil der Bahn (19) zwischen zwei aufeinanderfolgenden Rinnen (16) abgerundet ist, um an den Enden der Rinnen (16) einen harten Sturz des Schalenträgers zu vermeiden.

5. System zur Positionierung und Führung eines Schalenträgers nach Anspruch 1, dadurch gekennzeichnet, daß die Platte (2) Öffnungen (20) aufweist, die in den Rinnen (16) mittig angeordnet sind und den Zellen der Schale (1) entsprechen und den Durchtritt des Drückers (25) gestatten.

6. System zur Positionierung und Führung eines Schalenträgers nach einem der Ansprüche 1 bis 5, dadurch gekennzeichnet, daß die den Schalenträger bildende Platte aus einem Material der Sorte Aluminium hergestellt ist.

7. System zur Positionierung und Führung eines Schalenträgers nach einem der Ansprüche 1 bis 6, dadurch gekennzeichnet, daß die den Schalenträger bildende Platte mit seitlichen vertikalen Rinnen (10) versehen ist, die mit Führungen (11) des Schlittens (3) zusammenwirken.
